# EUROPÄISCHE PATENTANMELDUNG

(11) **EP 3 570 225 A1**
(43) Veröffentlichungstag der Anmeldung: **20.11.2019**
(21) Anmeldenummer: 19166646.0
(22) Anmeldetag: 01.04.2019
(51) Int. Cl.: G06Q 10/04, G02B 27/01

(54) **VERFAHREN ZUR BERECHNUNG EINER "AUGMENTED REALITY"-EINBLENDUNG FÜR DIE DARSTELLUNG EINER NAVIGATIONSROUTE AUF EINER AR-ANZEIGEEINHEIT, VORRICHTUNG ZUR DURCHFÜHRUNG DES VERFAHRENS SOWIE KRAFTFAHRZEUG UND COMPUTERPROGRAMM**

(30) Priorität: 14.05.2018 DE 102018207440
(71) Anmelder: VOLKSWAGEN AKTIENGESELLSCHAFT, 38440 Wolfsburg (DE)
(72) Erfinder: Kassner, Astrid, 10117 Berlin (DE); Henning, Matthias, 10713 Berlin (DE); Schmidt, Norwin, 25980 Westerland (DE)

(57) **Zusammenfassung**

Die Erfindung betrifft ein Verfahren zur Berechnung einer AR-Einblendung von Zusatzinformationen für eine Anzeige auf einer AR-Anzeigeeinheit (20), insbesondere ein Head-Up Display (HUD) eines Fahrzeuges (10) oder eine Datenbrille. Dabei dient die AR-Einblendung für die Darstellung einer Navigationsroute (2009, 2010) auf der AR-Anzeigeeinheit (20). Die Navigationsroute (2009, 2010) wird von einem Navigationssystem (130) vorgegeben. Die AR-Einblendung wird so berechnet, dass ein Symbol (310) für ein Zielobjekt oder eine Zielperson (340) an der nächsten Abbiegestelle oder am Horizont eingeblendet wird, wobei das Symbol (310) so gestaltet wird, dass für den Fahrer neben der Information, um welches Zielobjekt oder welche Zielperson (340) es sich handelt, ein Richtungsindikator (315) erkennbar wird, in welcher Richtung das Zielobjekt oder die Zielperson (340) zu finden ist. Das Verfahren kann vorteilhaft bei Mobilitätsdiensten wie ein organisierter Mitfahrdienst eingesetzt werden.

## Beschreibung

Der Vorschlag betrifft das technische Gebiet von Fahrerinformationssystemen, die auch unter dem Begriff Infotainmentsystem bekannt sind. Solche Systeme werden vor allem in Fahrzeugen eingesetzt. Es besteht aber auch die Möglichkeit des Einsatzes der Erfindung bei Fußgängern, Radfahrern etc. mit Datenbrille. Der Vorschlag betrifft weiterhin eine entsprechend ausgelegte Vorrichtung zur Durchführung des Verfahrens sowie ein Kraftfahrzeug und ein Computerprogramm.

Eine Zukunftsvision in der Automobilbranche ist es, die Windschutzscheibe des eigenen Fahrzeugs mit virtuellen Elementen bespielen zu können, um dem Fahrer einige Vorteile zu ermöglichen. Genutzt wird die sogenannte "Augmented Reality"-Technologie (AR). Weniger geläufig ist der entsprechende deutschsprachige Begriff der "erweiterten Realität". Dabei wird die reale Umgebung mit virtuellen Elementen angereichert. Das hat mehrere Vorteile: Der Blick nach unten auf andere Displays als der Windschutzscheibe entfällt, da viele relevante Informationen auf der Windschutzscheibe abgebildet werden. So muss der Fahrer seinen Blick nicht von der Fahrbahn abwenden. Das Besondere an den AR-Darstellungen ist, dass eine positionsgenaue Verortung der virtuellen Elemente in der realen Umwelt möglich ist. An dem Ort, wo der Fahrer den Blick in der realen Umwelt hinwendet, wird auch das virtuelle Element eingeblendet. Mit diesen Einblendungen kann die Real-Umwelt aus Sicht des Nutzers "überlagert" und mit zusätzlichen Informationen versehen werden, z.B. kann ein Navigationspfad eingeblendet werden. Dadurch ist ein geringerer kognitiver Aufwand seitens des Fahrers erreicht, da keine Interpretation einer abstrahierenden Grafik erfolgen muss, sondern ein intuitives Verständnis im Sinne der normalen Wahrnehmungsgewohnheiten stattfinden kann.

Zurzeit werden Head-Up Displays (HUD) als AR-Anzeigeeinheiten in den Fahrzeugen eingesetzt. Diese haben auch den Vorteil, dass das Bild des HUD näher an der realen Umwelt erscheint. Bei diesen Displays handelt es sich eigentlich um Projektionseinheiten, die ein Bild auf die Windschutzscheibe projizieren. Dieses Bild befindet sich jedoch aus der Sicht des Fahrers je nach Bauart des Moduls wenige Meter bis 15 Meter vor dem Fahrzeug. Dies hat den Vorteil, dass die eingeblendeten Informationen so präsentiert werden, dass die Augen des Fahrer selbst von Akkommodationstätigkeit entlastet werden.

Das "Bild" setzt sich dabei folgendermaßen zusammen: Es handelt sich weniger um ein virtuelles Display, sondern eher um eine Art "Schlüsselloch" in die virtuelle Welt. Die virtuelle Umgebung wird theoretisch über die reale Welt gelegt und enthält die virtuellen Objekte, die den Fahrer bei der Fahrt unterstützen und informieren. Die begrenzte Anzeigefläche des HUD hat zur Folge, dass davon ein Ausschnitt gesehen werden kann. Man schaut also durch die Anzeigefläche des HUD auf den Ausschnitt der virtuellen Welt. Da diese virtuelle Umgebung die reale Umgebung ergänzt, spricht man in diesem Fall auch von einer "Mixed Reality".

Zur Zeit wird ebenfalls intensiv an Technologien gearbeitet, die später ein autonomes Fahren ermöglichen sollen. Ein erster Ansatz ist dabei, den Fahrer nicht komplett von seinen Aufgaben zu entlasten, sondern dafür Sorge zu tragen, dass der Fahrer jederzeit die Steuerung des Fahrzeuges übernehmen kann. Der Fahrer nimmt außerdem Überwachungsfunktionen wahr. Durch neuere Technologien im Bereich der Fahrerinformationssysteme wie Head-Up Display ist es möglich, den Fahrer besser über das Geschehen im Umfeld seines Fahrzeuges zu informieren.

Aufgrund der derzeitigen Entwicklung hin zu höheren Autonomiestufen, wo aber viele Fahrzeuge nach wie vor noch vom Fahrer gesteuert werden, ist davon auszugehen, dass entsprechende zusätzliche Informationen mittelfristig bereits für manuell geführte Fahrzeuge und nicht erst langfristig für hochautomatisierte Systeme genutzt werden können. Dabei kann die im Folgenden noch näher beschriebene Lösung sowohl für manuell gesteuerte als auch für automatisch gesteuerte Fahrzeuge eingesetzt werden.

Für die Fahrer-Fahrzeug-Interaktion stellt sich hierbei die Frage, wie diese Informationen so dargestellt werden können, dass ein echter Mehrwert für den menschlichen Fahrer entsteht und er die bereitgestellten Informationen auch schnell, respektive intuitiv, verorten kann. Folgende Lösungen in diesem Bereich sind dabei schon aus dem Stand der Technik bekannt.

Die meisten Fahrzeuge weisen heute ein Navigationssystem auf, um eine Ziel- und Straßenführung für einen Fahrer vorzusehen. Weiterhin werden Fahrzeuge mit einem darin montierten HUD auf dem Markt angeboten, wobei das HUD gewünschte Informationen auf die Windschutzscheibe eines Fahrzeugs projiziert und dem Fahrer ermöglicht, die projizierten Informationen zu betrachten, während der Fahrer nach vorne blickt.

Aus der US 2016/03 648 23 A1 ist ein System und Verfahren für einen Mitfahrdienst bekannt. Darin wird ein Verfahren offenbart, bei dem eine Fahrgemeinschaftsanfrage von einem Fahrer empfangen wird. Ein Computer erarbeitet einen Fahrgemeinschaftsvorschlag, der auf den ersten und den zweiten Benutzer gerichtet ist. So wird eine Zeit für eine räumlich und zeitlich gemeinsame Fahrgemeinschaftsnachfrage bestimmt.

Aus der US 2017/03 088 24 A1 ist ein Verfahren und System bekannt, das dazu ausgelegt ist, eine Anweisung zu erhalten, die eine Transportfahrzeugeinheit anweist, einen Mitfahrer zu transportieren. Dabei wird in einem Schritt die Position und die Entfernung des Transportfahrzeuges relativ zu einem Treffpunkt bestimmt und angezeigt.

Aus der WO 2016 / 132 522 A1 ist ein Navigationsgerät mit Kamera bekannt.

Während klassische Navigationsanzeigen (mit herkömmlichen LCD-Displays) in der Regel schematische Darstellungen anzeigen (z.B. einen rechtwinklig verlaufenden Pfeil nach rechts als Zeichen dafür, dass bei nächster Gelegenheit rechts abgebogen werden soll), bieten AR-Anzeigen wesentlich effektivere Möglichkeiten. Da die Anzeigen als "Teil der Umwelt" dargestellt werden können, sind äußerst schnelle und intuitive Interpretationen für den Nutzer möglich. Dennoch weisen die bisher bekannten Ansätze auch verschiedene Probleme auf, für die zum jetzigen Zeitpunkt keine Lösungen bekannt sind. Dies wurde im Rahmen der Erfindung erkannt.

Die Navigationsfunktion innerhalb eines Fahrzeugs wird in Zukunft vermehrt durch Darstellungen auf einem Head-Up Display (augmentiert oder mit 2D-Manöver-Anzeigen) gestützt. Um den Nutzer mit einer konstanten Straßen- & Routenführung zu unterstützen, augmentiert das System einen Navigationspfad direkt auf die Straße.

Aber auch in anderen Situationen werden Zusatzinformationen gewünscht. Im Rahmen künftiger Mobilitätslösungen ist es denkbar, dass die Fahrzeugnutzer anderen Personen die Mitnahme in ihrem Fahrzeug ermöglichen. Die Vermittlung dieser Mitnahme kann durch eine Anfrage des Mitfahrers an den Fahrer z.B. über eine Smartphone-App zustande kommen. Für den Fahrer sollten die sich dabei ergebenden Interaktionen (Anfrage und Vereinbarung einer Mitnahme, Anpassung der Navigation, Abholung des Mitfahrers) idealerweise ebenfalls als Zusatzinformationen eingeblendet werden. Dies sollte aber möglichst ablenkungssicher geschehen.

Es besteht also der Bedarf für weitere Verbesserungen bei der Routenführung eines Fahrzeuges und der diesbezüglichen Rückmeldung zum Fahrer über das Infotainment-System.

Die Erfindung setzt sich zur Aufgabe, den Fahrer besser bei Routenänderungen insbesondere im Hinblick auf künftigen Mobilitätslösungen zu unterstützen.

Diese Aufgabe wird durch ein Verfahren zur Berechnung einer "augmented reality"-Einblendung für die Darstellung einer Navigationsroute auf einer AR-Anzeigeeinheit gemäß Anspruch 1, eine Vorrichtung zur Durchführung des Verfahrens gemäß Anspruch 10 sowie ein Kraftfahrzeug gemäß Anspruch 14 und ein Computerprogramm gemäß Anspruch 15 gelöst. Dabei dient die Einblendung dem Zweck der Unterstützung des Fahrers bei der Längsführung des Fahrzeuges.

Die abhängigen Ansprüche beinhalten vorteilhafte Weiterbildungen und Verbesserungen der Erfindung entsprechend der nachfolgenden Beschreibung dieser Maßnahmen.

Das Verfahren zur Berechnung einer AR-Einblendung für die Darstellung einer Navigationsroute auf einer AR-Anzeigeeinheit entsprechend des Vorschlages besteht darin, dass die AR-Einblendung so berechnet wird, dass die AR-Einblendung so berechnet wird, dass ein Symbol für ein Zielobjekt oder eine Zielperson an der nächsten Abbiegestelle oder am Horizont eingeblendet wird, wobei das Symbol so gestaltet wird, dass für den Fahrer neben der Information um welches Zielobjekt oder welche Zielperson es sich handelt, ein Richtungsindikator erkennbar wird, in welcher Richtung das Zielobjekt oder die Zielperson zu finden ist. Das Verfahren ist besonders vorteilhaft einzusetzen für die neuen Mobilitätslösungen nach Art einer Mitfahrerzentrale. Die Mitnahme anderer Personen, speziell die Abholung und Ablieferung der Person, wird dem Fahrer erleichtert. Das Verfahren lässt sich auch bei anderen Gelegenheiten im Alltag einsetzen, z.B. wenn der Fahrer auf der Suche nach bestimmten Einrichtungen, auch Points of Interest POI genannt, ist.

Eine vorteilhafte Maßnahme des Verfahrens besteht darin, dass bei Annäherung an das Zielobjekt oder die Zielperson die AR-Einblendung für das Symbol so berechnet wird, dass das Symbol am Ort des Zielobjektes oder der Zielperson eingeblendet wird, wenn das Zielobjekt oder die Zielperson in Sichtweite ist, wobei der Richtungsindikator auf den Boden vor dem Zielobjekt oder der Zielperson gerichtet ist. Der Fahrer erfährt so eine konkrete Unterstützung. Sein Blick wird direkt zum Zielobjekt oder der Zielperson gelenkt. Längeres Suchen der ihm unbekannten Zielperson oder des ihm unbekannten Zielobjektes entfällt, der Fahrer wird weniger abgelenkt.

Weiterhin vorteilhaft ist, wenn bei weiterer Annäherung an das Zielobjekt, und dadurch bedingter Herauswanderung des Zielobjektes oder der Zielperson aus dem Einblendbereich der AR-Anzeigeeinheit die AR-Einblendung für das Symbol so berechnet wird, dass das Symbol am Rand des Einblendbereiches so dargestellt wird, dass der Richtungsindikator zum Zielobjekt oder zur Zielperson gerichtet ist. So erfährt der Fahrer eine weitere Unterstützung auch dann, wenn der Ort der Zielperson oder des Zielobjektes bereits erreicht ist. So kann die Zielperson schnell aufgenommen werden, ohne den nachfolgenden Verkehr länger zu beeinträchtigen. Dies ist besonders an verkehrsreichen Abholorten vorteilhaft, wo kaum Haltemöglichkeiten sind.

Die Ausgestaltung kann auch so getroffen werden, dass die AR-Einblendung bei weiterer Annäherung an das Zielobjekt für das Symbol so berechnet wird, dass das Symbol vom Rand des Einblendbereiches in Richtung zur Straßenmitte weggerückt erscheint. Dabei zeigt der Richtungsindikator ja an, wo die Person zu finden ist. Der Hinweis liegt dann zentraler im Blickfeld des Fahrers und deutet an, dass der Fahrer halten sollte.

Weiterhin kann es vorteilhaft sein, dass die AR-Einblendung für das Symbol so berechnet wird, dass das Symbol vergrößert wird, wenn das Fahrzeug sich an das Zielobjekt oder die Zielperson annähert. Dies entspricht der natürlichen Erfahrung, dass auch das Zielobjekt oder die Zielperson sich vergrößert bei Annäherung.

Besonders vorteilhaft ist es, wenn das Symbol eine Sprechblasenform hat, bei der in der Mitte des Symbols eine Abbildung oder ein Piktogramm des Zielobjektes oder der Zielperson eingefügt wird und der Richtungsindikator durch Drehung des Sprechblasenpfeils am Rand ausgebildet wird. Diese Sprechblasenform wird von den meisten Menschen richtig interpretiert.

Eine vorteilhafte Maßnahme besteht noch darin, die AR-Einblendung für die Darstellung des Symbols so zu berechnen, dass der Name oder eine andere Bezeichnung des Zielobjektes oder der Zielperson unterhalb des Symbols eingeblendet wird.

Weiterhin ist es vorteilhaft, wenn die AR-Einblendung ebenfalls eine Entfernungsangabe bis zum Zielobjekt oder der Zielperson umfasst, die so berechnet wird, dass die Entfernungsangabe neben dem Symbol eingeblendet wird. Damit wird der Fahrer genauer informiert.

Für eine Vorrichtung zur Durchführung des Verfahrens gemäß der Erfindung ist es vorteilhaft, dass die Vorrichtung eine AR-Anzeigeeinheit aufweist, eine Recheneinheit und ein Navigationssystem. Von dem Navigationssystem wird eine Navigationsroute berechnet, wobei das Navigationssystem so ausgelegt ist, dass es die Navigationsroute von Zeit zu Zeit neu berechnet, um sich an wechselnde Bedingungen, insbesondere die Verkehrsverhältnisse, anzupassen. Die Recheneinheit führt die Schritte zur Berechnung einer AR-Einblendung durch. Dabei ist die Recheneinheit für die Berechnung einer AR-Einblendung ausgelegt, der Art, dass ein Symbol für ein Zielobjekt oder eine Zielperson an der nächsten Abbiegestelle oder am Horizont eingeblendet wird, wobei das Symbol so gestaltet ist, dass für den Fahrer neben der Information um welches Zielobjekt oder welche Zielperson es sich handelt, ein Richtungsindikator erkennbar wird, in welcher Richtung das Zielobjekt oder die Zielperson zu finden ist. Wie zuvor im Zusammenhang mit dem erfindungsgemäßen Verfahren erläutert, ist die Lösung für kommerzielle Mobilitätslösungen nach Art einer Mitfahrerzentrale interessant.

Dabei besteht eine vorteilhafte Variante darin, dass die Vorrichtung mit Umfeldbeobachtungsmitteln ausgestattet ist, mit deren Hilfe eine Erkennung der Zielperson oder des Zielobjektes erfolgt. Zu diesem Zweck kann z.B. eine oder mehrere Kameras an der Vorrichtung angebracht sein. Es werden Bilderkennungsverfahren eingesetzt, um die von der Kamera gelieferten Bilder auszuwerten. Hier gibt es bekannte Algorithmen, mit denen die Bildauswertung zur Objekt oder Personenerkennung durchgeführt werden kann.

Die Vorrichtung wird in vorteilhafter Weise so ausgelegt, dass mit der entsprechend programmierten Recheneinheit die Berechnungen von AR-Einblendungen durchgeführt werden, die in den entsprechenden Verfahrensschritten des erfindungsgemäßen Verfahrens aufgeführt sind.

Im Übrigen gelten für die Vorrichtung zur Durchführung des Verfahrens mit der entsprechend programmierten Recheneinheit die gleichen Vorteile wie bei den Ansprüchen mit den entsprechenden Verfahrensschritten erwähnt.

Besonders vorteilhaft ist, wenn die Anzeigeeinheit der Vorrichtung als Head-Up Display ausgeführt ist. Statt eines Head-Up Displays kann in der Vorrichtung als Anzeigeeinheit eine Datenbrille, die der Fahrer aufsetzt, oder ein Monitor eingesetzt werden, auf dem ein Kamerabild angezeigt wird, in das die AR-Einblendung eingefügt wird.

Wie erwähnt, kann die Erfindung in vorteilhafter Weise auch eingesetzt werden, wenn die Anzeigeeinheit einer Datenbrille entspricht. Dann lässt sich das erfindungsgemäße Verfahren selbst bei Fußgängern, Radfahrern, Kradfahrern usw. einsetzen.

Die Vorrichtung zur Durchführung des Verfahrens kann in vorteilhafter Weise Teil eines Fahrzeuges sein.

Für ein Computerprogramm, das in der Recheneinheit der Vorrichtung zur Abarbeitung kommt, um das erfindungsgemäße Verfahren durchzuführen, gelten die entsprechenden Vorteile wie zu dem erfindungsgemäßen Verfahren beschrieben. Das Programm kann als App gestaltet sein, dass per Download von einem Anbieter in die Vorrichtung geladen wird.

Ausführungsbeispiele der Erfindung sind in den Zeichnungen dargestellt und werden nachfolgend anhand der Figuren näher erläutert.

Es zeigen:
- Fig. 1: das Prinzip der Einblendung von Informationen in das Sichtfeld des Fahrers eines Fahrzeuges während der Fahrt mit Hilfe eines Head-Up Displays;
- Fig. 2: das typische Cockpit eines Fahrzeuges;
- Fig. 3: ein Blockschaltbild des Infotainment-Systems des Fahrzeuges;
- Fig. 4: ein Ablaufdiagramm für ein Programm zur Berechnung der verschiedenen AR-Einblendungen bei dem Ablauf des erfindungsgemäßen Verfahrens;
- Fig. 5: eine Darstellung einer AR-Einblendung für den Fahrer bei Eingang einer Mitfahreranfrage in einem Ridesharing-System;
- Fig. 6: eine Darstellung einer AR-Einblendung für den Fahrer nach Annahme der Mitnahme der Person von der die Mitfahranfrage stammt;
- Fig. 7: eine Darstellung einer AR-Einblendung für den Fahrer mit einer Navigationsdarstellung für den Fall, dass keine Mitfahranfrage angenommen wurde;
- Fig. 8: eine Darstellung einer AR-Einblendung für den Fahrer mit einer Navigationsdarstellung für den Fall, dass eine Mitfahranfrage angenommen wurde;
- Fig. 9: eine Darstellung einer AR-Einblendung für den Fahrer mit einer Navigationsdarstellung für den Fall, dass die Mitfahr-Person bereits im Sichtbereich des Fahrers liegt;
- Fig. 10: eine Darstellung einer AR-Einblendung für den Fahrer mit zwei Navigationsdarstellungen für den Fall, dass die Mitfahr-Person durch weitere Annäherung des Fahrzeuges gerade aus dem Einblendbereich der HUD-Anzeigeeinheit verschwindet;
- Fig. 11: eine Darstellung einer alternativen AR-Einblendung für den Fahrer mit einer Navigationsdarstellung für den Fall, dass eine Mitfahranfrage angenommen wurde; und
- Fig. 12: eine Darstellung einer AR-Einblendung für den Fahrer mit einer Navigationsdarstellung für den Fall, dass der Fahrer einen bestimmten Punkt seines Interesses eingegeben hat.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

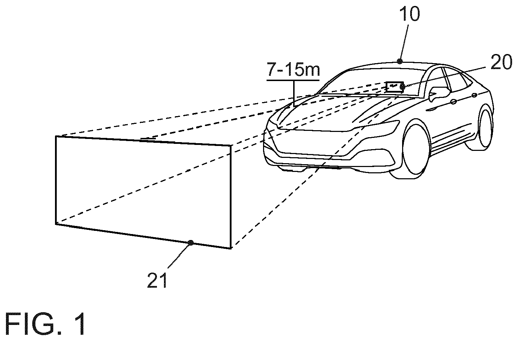

Fig. 1 veranschaulicht die prinzipielle Funktionsweise eines Head-Up Displays. Das Head-Up Display 20 ist im Fahrzeug 10 unterhalb/hinter dem Kombiinstrument im Armaturenbrettbereich angebracht. Durch Projektion auf die Windschutzscheibe werden Zusatzinformationen in das Sichtfeld des Fahrers eingeblendet. Diese Zusatzinformationen erscheinen so, als seien sie auf eine Projektionsfläche 21 im Abstand von 7 - 15 m vor dem Fahrzeug 10 projiziert. Durch diese Projektionsfläche 21 hindurch bleibt aber die reale Welt sichtbar. Mit den eingeblendeten Zusatzinformationen wird quasi eine virtuelle Umgebung erzeugt. Die virtuelle Umgebung wird theoretisch über die reale Welt gelegt und enthält die virtuellen Objekte, die den Fahrer bei der Fahrt unterstützen und informieren. Es wird aber nur auf einen Teil der Windschutzscheibe projiziert, so dass die Zusatzinformationen nicht beliebig im Sichtfeld des Fahrers angeordnet werden können.

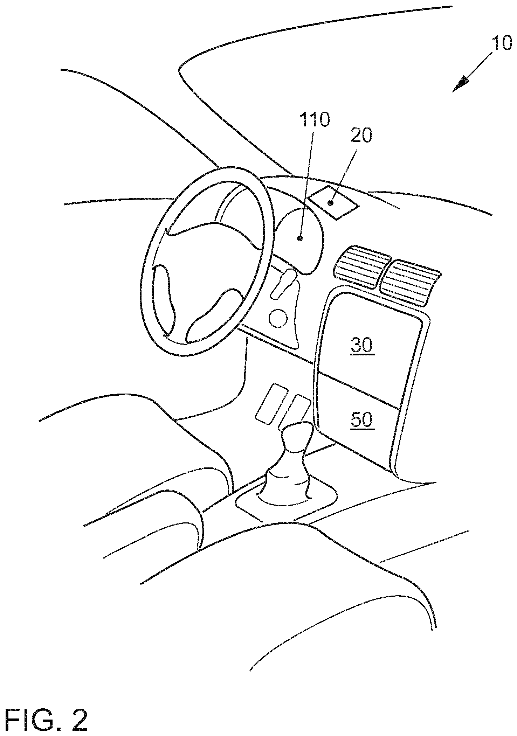

Fig. 2 zeigt das Cockpit des Fahrzeuges 10. Dargestellt ist ein Personenkraftwagen Pkw. Als Fahrzeug 10 kämen allerdings beliebige andere Fahrzeuge ebenfalls in Betracht. Beispiele von weiteren Fahrzeugen sind: Busse, Nutzfahrzeuge, insbesondere Lastkraftwagen Lkw, Landmaschinen, Baumaschinen, Schienenfahrzeuge usw. Der Einsatz der Erfindung wäre allgemein bei Landfahrzeugen, Schienenfahrzeugen, Wasserfahrzeugen und Luftfahrzeugen möglich.

In dem Cockpit sind drei Anzeigeeinheiten eines Infotainment-Systems mit Bezugszeichen hervorgehoben. Es handelt sich um das Head-Up-Display 20 und einen berührungsempfindlichen Bildschirm 30, der in der Mittelkonsole angebracht ist. Bei der Fahrt liegt die Mittelkonsole nicht im Sichtfeld des Fahrers. Deshalb werden die Zusatzinformationen während der Fahrt nicht auf der Anzeigeeinheit 30 eingeblendet. Daneben ist noch das übliche Kombiinstrument 110 im Armaturenbrett gezeigt.

Der berührungsempfindliche Bildschirm 30 dient dabei insbesondere zur Bedienung von Funktionen des Fahrzeugs 10. Beispielsweise können darüber ein Radio, ein Navigationssystem, eine Wiedergabe von gespeicherten Musikstücken und/oder eine Klimaanlage, andere elektronische Einrichtungen oder andere Komfortfunktionen oder Applikationen des Fahrzeugs 10 gesteuert werden. Zusammengefasst wird häufig von einem "Infotainment-System" gesprochen. Ein Infotainment-System bezeichnet bei Kraftfahrzeugen, speziell Pkw, die Zusammenführung von Autoradio, Navigationssystem, Freisprecheinrichtung, Fahrerassistenzsystemen und weiterer Funktionen in einer zentralen Bedieneinheit. Der Begriff Infotainment ist ein Kofferwort, zusammengesetzt aus den Worten Information und Entertainment (Unterhaltung). Zur Bedienung des Infotainment-Systems wird hauptsächlich der berührungsempfindliche Bildschirm 30 ("Touchscreen") benutzt, wobei dieser Bildschirm 30 insbesondere von einem Fahrer des Fahrzeugs 10, aber auch von einem Beifahrer des Fahrzeugs 10 gut eingesehen und bedient werden kann. Unterhalb des Bildschirms 30 können zudem mechanische Bedienelemente, beispielsweise Tasten, Drehregler oder Kombinationen hiervon, wie beispielsweise Drückdrehregler, in einer Eingabeeinheit 50 angeordnet sein. Typischerweise ist auch eine Lenkradbedienung von Teilen des Infotainmentsystems möglich. Diese Einheit ist nicht separat dargestellt, sondern wird als Teil der Eingabeeinheit 50 betrachtet.

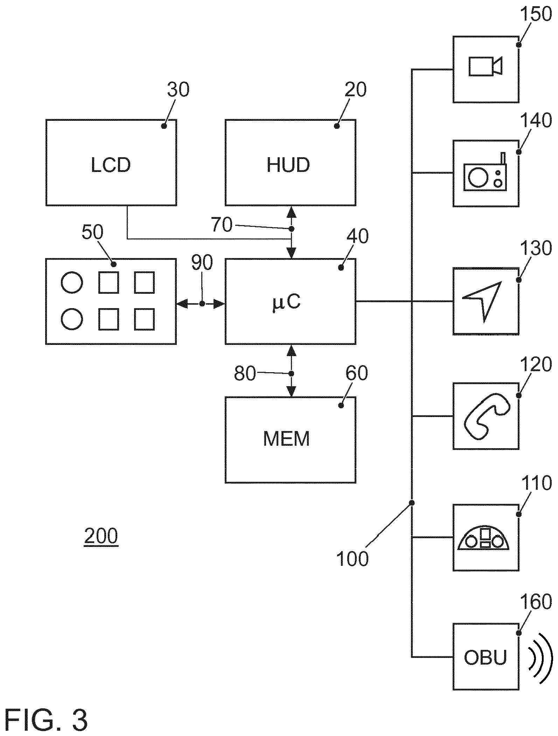

Fig. 3 zeigt schematisch ein Blockschaltbild des Infotainment-Systems 200 sowie beispielhaft einige Teilsysteme oder Applikationen des Infotainment-Systems. Die BedienungsVorrichtung umfasst die berührungsempfindliche Anzeigeeinheit 30, eine Recheneinrichtung 40, eine Eingabeeinheit 50 und einen Speicher 60. Die Anzeigeeinheit 30 umfasst sowohl eine Anzeigefläche zum Anzeigen veränderlicher grafischer Informationen als auch eine über der Anzeigefläche angeordnete Bedienoberfläche (berührungssensitive Schicht) zum Eingeben von Befehlen durch einen Benutzer.

Die Anzeigeeinheit 30 ist über eine Datenleitung 70 mit der Recheneinrichtung 40 verbunden. Die Datenleitung kann nach dem LVDS-Standard ausgelegt sein, entsprechend Low Voltage Differential Signalling. Über die Datenleitung 70 empfängt die Anzeigeeinheit 30 Steuerdaten zum Ansteuern der Anzeigefläche des Touchscreens 30 von der Recheneinrichtung 40. Über die Datenleitung 70 werden auch Steuerdaten der eingegebenen Befehle von dem Touchscreen 30 zu der Recheneinrichtung 40 übertragen. Mit der Bezugszahl 50 ist die Eingabeeinheit bezeichnet. Ihr zugehörig sind die schon erwähnten Bedienelemente wie Tasten, Drehregler, Schieberegler, oder Drehdrückregler, mit deren Hilfe die Bedienperson über die Menüführung Eingaben machen kann. Unter Eingabe wird allgemein das Anwählen einer ausgewählten Menüoption verstanden, wie auch das Ändern eines Parameters, das Ein- und Ausschalten einer Funktion usw.

Die Speichereinrichtung 60 ist über eine Datenleitung 80 mit der Recheneinrichtung 40 verbunden. In dem Speicher 60 ist ein Piktogrammverzeichnis und/oder Symbolverzeichnis hinterlegt mit den Piktogrammen und/oder Symbolen für die möglichen Einblendungen von Zusatzinformationen.

Die weiteren Teile des Infotainment-Systems Kamera 150, Radio 140, Navigationsgerät 130, Telefon 120 und Kombiinstrument 110 sind über den Datenbus 100 mit der Vorrichtung zur Bedienung des Infotainment-Systems verbunden. Als Datenbus 100 kommt die Highspeed-Variante des CAN-Bus nach ISO Standard 11898-2 in Betracht. Alternativ käme z.B. auch der Einsatz eines auf Ethernet-Technologie beruhenden Bussystems wie BroadR-Reach in Frage. Auch Bussysteme, bei denen die Datenübertragung über Lichtwellenleiter geschieht, sind einsetzbar. Als Beispiele werden genannt der MOST Bus (Media Oriented System Transport) oder der D2B Bus (Domestic Digital Bus). Hier wird noch erwähnt, dass die Kamera 150 als konventionelle Videokamera ausgelegt sein kann. In diesem Fall nimmt sie 25 Vollbilder/s auf, was bei dem Interlace-Aufnahmemodus 50 Halbbilder/s entspricht. Alternativ kann eine Spezialkamera eingesetzt werden, die mehr Bilder/s aufnimmt, um die Genauigkeit der Objekterkennung bei sich schneller bewegenden Objekten zu erhöhen. Es können mehrere Kameras zur Umfeldbeobachtung eingesetzt werden. Daneben könnten auch die schon erwähnten RADAR- oder LIDAR-Systeme ergänzend oder alternativ eingesetzt werden, um die Umfeldbeobachtung durchzuführen oder zu erweitern. Für die drahtlose Kommunikation nach innen und außen ist das Fahrzeug 10 mit einem Kommunikationsmodul 160 ausgestattet. Dieses Modul wird oft auch als On-Board Unit bezeichnet. Es kann für die Mobilfunk-Kommunikation, z.B. nach LTE Standard, entsprechend Long Term Evolution, ausgelegt sein. Ebenfalls kann es für WLAN-Kommunikation, entsprechend Wireless LAN, ausgelegt sein, sei es für die Kommunikation zu Geräten der Insassen im Fahrzeug oder für die Fahrzeug-zu-Fahrzeug Kommunikation oder für die Fahrzeug-zu-Infrastruktur-Kommunikation, etc.

Das erfindungsgemäße Verfahren zur Berechnung einer AR-Einblendung von Zusatzinformationen für eine Anzeige auf einer AR-Anzeigeeinheit 20 wird im Folgenden anhand von einem Ausführungsbeispiel ausführlich erläutert. Dabei werden auch alternative Ausführungsformen diskutiert.

Für die weiteren Figuren gilt, dass gleiche Bezugszahlen die gleichen Felder und Symbole bezeichnen wie bei der Beschreibung der Figuren 1 bis 3 erläutert.

Es wird der Ablauf der Mitnahme eines Mitfahrers bei einem "Mitfahrdienst" anhand eines Ablaufdiagramms und mehrerer Abbildungen von AR-Einblendungen, die während des Ablaufs eingeblendet werden, erläutert.

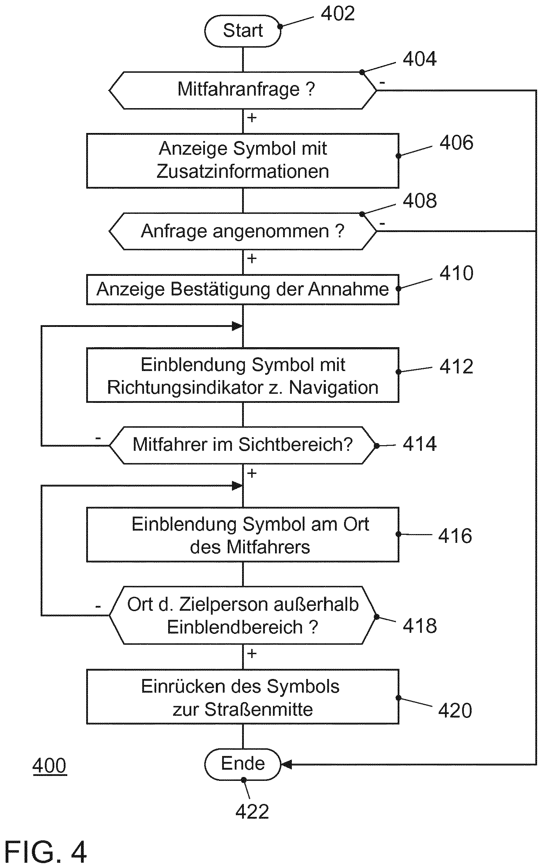

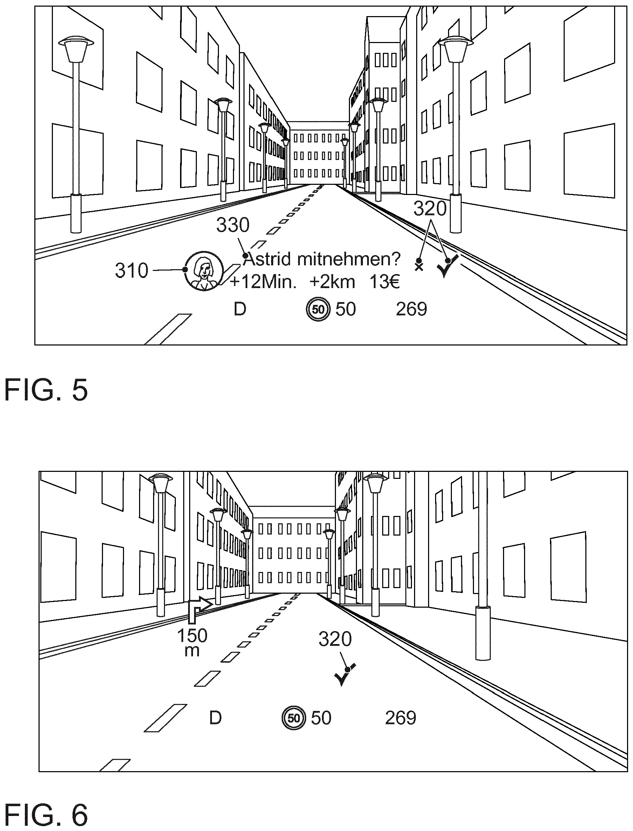

Die Fig. 4 zeigt das Ablaufdiagramm für ein Computerprogramm 400 für die Berechnung der AR-Einblendungen für die verschiedenen Phasen bei der Anbahnung der Mitnahme eines Mitfahrers und bei der Abholung des Mitfahrers. Das Programm 400 wird in der Recheneinheit 40 abgearbeitet. Der Programmstart ist mit der Bezugszahl 402 bezeichnet. In der Abfrage 404 wird geprüft, ob eine Mitfahranfrage einer Person eingegangen ist. Wenn nicht, wird das Programm bereits wieder im Schritt 422 beendet. Wenn doch eine Mitfahranfrage eingegangen ist, wird im Schritt 406 eine AR-Einblendung mit einem Symbol 310 und weiteren Zusatzinformationen berechnet und angezeigt. Die Anzeige der AR-Einblendung ist in Fig. 5 gezeigt. Als weitere Zusatzinformation wird ein Text in Frageform mit dem Namen 330 der anfragenden Person eingeblendet. Weitere Zusatzinformationen betreffen die Streckenlänge des nötigen Umweges, um die Person abzuholen, den Zusatzzeitbedarf für die Abholung und den Fahrpreis, den die Person bezahlen würde, wenn sie mitgenommen würde. Daneben finden sich noch zwei Bestätigungselemente 320, die dem Fahrer eine Bedienungsmöglichkeit geben. Mit Auswahl des Hakens und Drücken der OK-Taste bei der Lenkradbedienung kann der Fahrer die Mitfahranfrage bequem annehmen. Durch Auswahl des Kreuzes und Drücken der OK-Taste bei der Lenkradbedienung kann der Fahrer die Mitfahranfrage bequem ablehnen. Das sind typische Informationen, die bei solchen Ridesharing-Diensten ausgegeben werden. Darunter sind noch Zusatzinformationen eingeblendet, die von bestimmten Fahrerassistenzsystemen wie einer Verkehrszeichenerkennung stammen.

In heutigen Fahrzeugen wird typischerweise ein Multifunktionslenkrad MFL eingebaut, mit dem das Infotainmentsystem bedient werden kann. Die grundsätzliche Bedienung über das MFL kann mit folgenden Tasten geschehen. Mit den Pfeil-Tasten wird ein Bedienungselement ausgewählt, mit der OK-Taste (Bestätigungstaste) wird das ausgewählte Element übernommen.

Im weiteren Ablauf des Programms folgt eine Abfrage 408. Darin wird überprüft, ob die Mitfahranfrage angenommen wurde. Falls nicht, wird das Programm wieder im Programmschritt 422 beendet. Wurde die Anfrage angenommen, erfolgt im Programmschritt 410 die Berechnung einer AR-Einblendung in der die Annahme der Mitfahranfrage dem Fahrer bestätigt wird. Ein Beispiel dieser AR-Einblendung ist in Fig. 6 gezeigt. Es handelt sich um eine reduzierte Form bei der lediglich der Auswahlhaken angezeigt wird. Parallel dazu findet im Navigationssystem eine Neuberechnung der Fahrroute statt, wobei der Abholort des Mitfahrers als Zwischenziel eingerechnet wird.

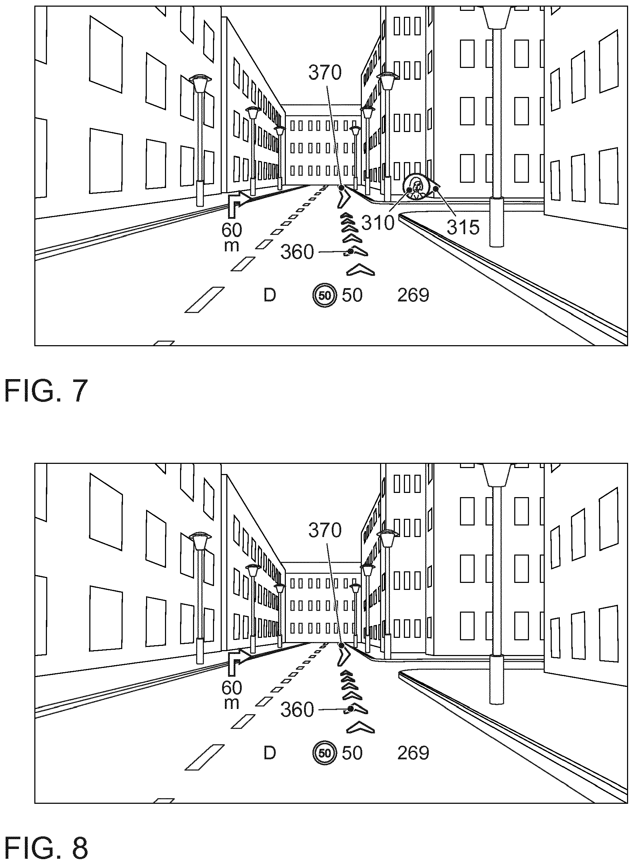

Danach wechselt das Programm zur Berechnung von AR-Einblendungen für die Navigation zum Abholort der Mitfahrerin. Im Programmschritt 412 wird eine AR-Einblendung berechnet, die zusätzlich zu den üblichen Navigationshinweisen wie Navigationspfad 360 und Abbiegehinweis 370 ein Symbol 310 umfasst, dass eine Sprechblasenform hat und auf den Mitfahrer / Mitfahrerin hinweist. Fig. 7 zeigt ein Beispiel dieser Einblendung. Dort ist das Ausführungsbeispiel so gewählt, dass es sich um eine kreisrunde Sprechblasenform handelt, wobei die Fläche mit einer Abbildung des Mitfahrers ausgefüllt ist. Es kann sich um eine Miniaturansicht einer bei der Mitfahranfrage mitgelieferten Fotografie handeln, die vom System übernommen wurde. Die AR-Einblendung wird mit Unterstützung des Navigationssystems 130 so berechnet, dass der Sprechblasenpfeil bei einem bevorstehenden Fahrmanöver als Richtungsindikator 315 in diejenige Richtung gedreht wird, in die sich das Fahrzeug 10 entsprechend des neu berechneten Navigationspfades 370 bewegen muss.

Im Vergleich dazu ist in Fig. 8 gezeigt, welche Elemente bei der üblichen AR-Einblendung bei der Navigation des Fahrzeuges dargestellt werden. Das Symbol 310 mit dem Richtungsindikator 315 fehlt dementsprechend in dieser Abbildung.

Anschließend erfolgt in Abfrage 414 eine Prüfung, ob sich das Fahrzeug schon soweit an den Abholort angenähert hat, dass die Mitfahrerin im Sichtbereich ist. Diese Prüfung kann mit Bordmitteln geschehen. Die Position des Fahrzeuges 10 wird vom Navigationssystem 130 laufend erfasst. Durch Analyse der Position des Fahrzeuges 10 kann bereits ermittelt werden, ob der Abholort in Sichtweite ist. Zusätzlich können die Umfeldbeobachtungsmittel, wie die Kamera 150 eingesetzt werden, um den Abholort bzw. die Mitfahrerin 340 zu identifizieren. Wie bereits erwähnt, können zu diesem Zweck Bildauswertealgorithmen, wie zum Beispiel ein Gesichtserkennungsalgorithmus eingesetzt werden. Wenn die Mitfahrerin nicht im Sichtbereich ist, verzweigt das Programm zurück zum Schritt 412 und es werden weitere Navigationshinweise bei der Navigation zum Abholort berechnet.

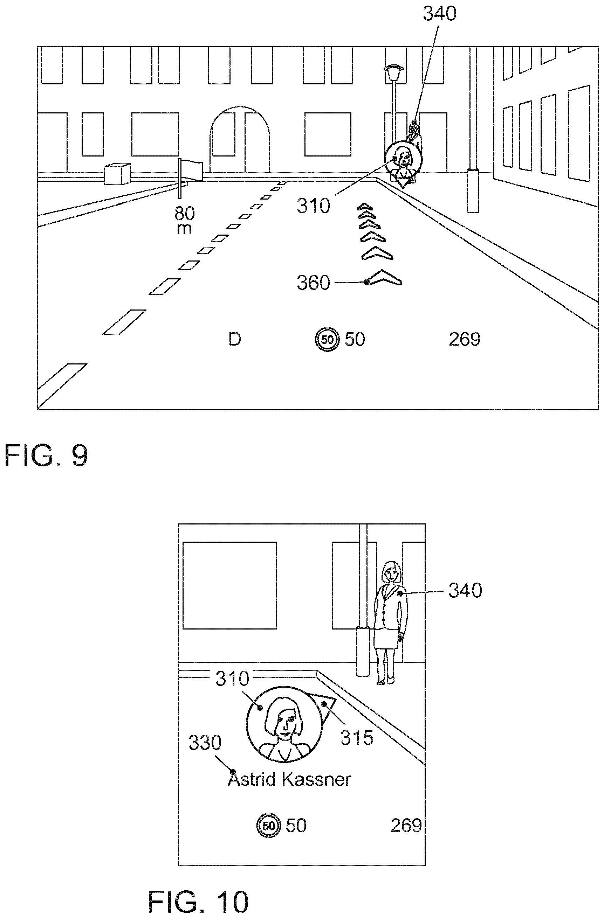

Fig. 9 zeigt eine beispielhafte AR-Einblendung für die Situation, wo die Mitfahrerin in Sichtweite ist. Das Symbol 310 ist direkt an der Stelle der erkannten Person verortet. Dies hat auch den Zweck, die Mitfahrerin innerhalb einer Personengruppe besser verorten zu können. Der Sprechblasenpfeil zeigt nach unten solange die Sprechblase am Ort der Mitfahrerin positioniert ist.

In Programmschritt 418 wird geprüft, ob die Annäherung bereits so weit fortgeschritten ist, dass die Zielperson aus dem Einblendbereich 21 der HUD-Anzeigeeinheit 20 herauswandert. Wenn nicht, verzweigt das Programm zurück zum Schritt 416.

Falls ja, wird im Programmschritt 420 die AR-Einblendung so berechnet, dass beim Annähern an den Abholort sich die Sprechblase von der Position der Mitfahrerin ablöst und in Richtung zur Spurmitte wandert, da sie sonst außerhalb des Anzeigebereichs liegen würde. Der drehbare Richtungsindikator 315 in Form des Sprechblasenpfeils zeigt dann nicht mehr nach unten, sondern wird in Richtung der Mitfahrerin gedreht. Mit dieser Einblendung wird dem Fahrer auch indirekt ein Hinweis gegeben, dass er anhalten soll. Dies entspricht dem üblichen Vorgehen bei einer Einweisung eines Fahrers durch eine Person, die eine Signalkelle hält, wie Polizei, Feuerwehr, Bauarbeiter, etc. Auch da wird die Kelle vor das Fahrzeug gehalten, um dem Fahrer zu signalisieren, dass er anhalten soll. Kurz vor dem Anhalten wird der Name 330 der Mitfahrerin eingeblendet. Dieser Vorgang ist in Fig. 10 dargestellt. Dort ist dargestellt, dass die Mitfahrerin 340 gerade aus dem Einblendbereich 21 verschwindet, der Richtungsindikator 315 gedreht ist und der Name 330 eingeblendet ist. Das Programm endet anschließend im Programmschritt 422.

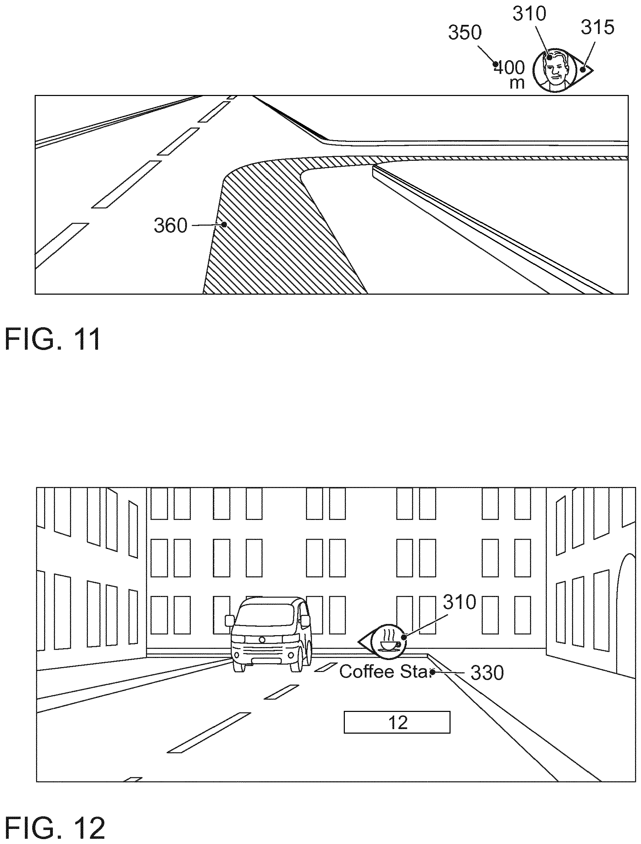

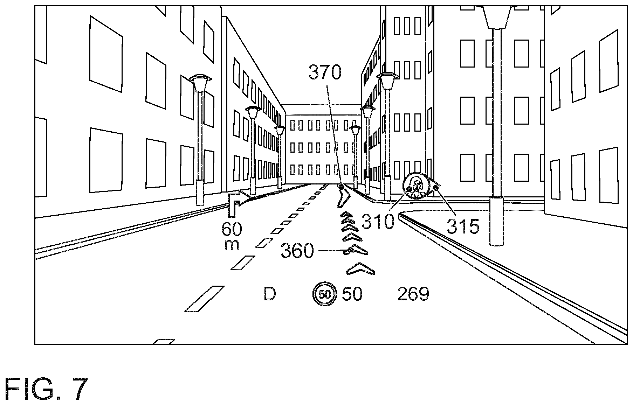

Fig. 11 zeigt noch eine andere Form der Darstellung eines Navigationspfades 360 mit Einblendung des Symbols 310. Dabei wird der Navigationspfad als durchgängiges Band dargestellt und neben dem Symbol 310 wird eine Entfernungsangabe 350 eingeblendet, um den Fahrer darüber zu informieren, wie weit es noch bis Abholort ist.

Fig. 12 zeigt eine Form einer AR-Einblendung für den Fall, dass nicht ein Mitfahrer abgeholt werden soll, sondern der Fahrer als Zwischenziel einen Punkt seines Interesses, entsprechend Point of Interest POI, eingegeben hat. Auch für den Fall ist das Symbol 310 als Sprechblase gestaltet. Darunter wird noch eine Bezeichnung 330 des POI in Textform eingeblendet. Die Verwendung der Sprechblase als Symbol lässt sich somit auch auf statische Objekte anwenden. Auch hier wäre die Sprechblase solange direkt über dem POI verortet, wie sich dieses innerhalb des Anzeigebereichs des Head-up Displays 20 befindet.

Bei weiterer Annäherung würde wieder die beschriebene Umpositionierung in Richtung zur Spurmitte erfolgen.

Alle hierin erwähnten Beispiele wie auch bedingte Formulierungen sind ohne Einschränkung auf solche speziell angeführten Beispiele zu verstehen. So wird es zum Beispiel von Fachleuten anerkannt, dass das hier dargestellte Blockdiagramm eine konzeptionelle Ansicht einer beispielhaften Schaltungsanordnung darstellt. In ähnlicher Weise ist zu erkennen, dass ein dargestelltes Flussdiagramm, Zustandsübergangsdiagramm, Pseudocode und dergleichen verschiedene Varianten zur Darstellung von Prozessen darstellen, die im Wesentlichen in computerlesbaren Medien gespeichert und somit von einem Computer oder Prozessor ausgeführt werden können. Das in den Patentansprüchen genannte Objekt kann ausdrücklich auch eine Person sein.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform, die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein oder ein Teil, der über das Betriebssystem ausgeführt wird.

Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

Die Erfindung kann immer dann eingesetzt werden, wenn mit AR-Einblendungen das Sichtfeld eines Fahrers, einer Bedienperson oder auch einfach nur einer Person mit Datenbrille angereichert werden kann.

### Bezugszeichenliste

- 10: Fahrzeug
- 20: Head-Up Display HUD
- 21: virtuelle Projektionsfläche
- 30: berührungsempfindliche Anzeigeeinheit
- 40: Recheneinheit
- 50: Eingabeeinheit
- 60: Speichereinheit
- 70: Datenleitung zur Anzeigeeinheit
- 80: Datenleitung zur Speichereinheit
- 90: Datenleitung zur Eingabeeinheit
- 100: Datenbus
- 110: Kombiinstrument
- 120: Telefon
- 130: Navigationsgerät
- 140: Radio
- 150: Kamera
- 160: Kommunikationsmodul
- 200: Infotainment-System
- 310: Symbol
- 315: Richtungsindikator
- 320: Bestätigungsoption
- 330: Bezeichnung
- 340: Zielperson
- 350: Entfernungsangabe
- 360: Navigationspfad
- 370: Abbiegehinweis
- 400: Computerprogramm
- 402-: verschiedene
- 422: Programmschritte

## Patentansprüche

1. Verfahren zur Berechnung einer AR-Einblendung, entsprechend "augmented reality"-Einblendung, für die Darstellung einer Navigationsroute (2009, 2010) auf einer AR-Anzeigeeinheit (20), insbesondere ein Head-Up Display HUD eines Fahrzeuges (10) oder eine Datenbrille, wobei die Navigationsroute (2009, 2010) von einem Navigationssystem (130) berechnet wird, **dadurch gekennzeichnet, dass** die AR-Einblendung so berechnet wird, dass ein Symbol (310) für ein Zielobjekt oder eine Zielperson (340) an der nächsten Abbiegestelle oder am Horizont eingeblendet wird, wobei das Symbol (310) so gestaltet wird, dass für den Fahrer neben der Information um welches Zielobjekt oder welche Zielperson (340) es sich handelt, ein Richtungsindikator (315) erkennbar wird, in welcher Richtung das Zielobjekt oder die Zielperson (340) zu finden ist.

2. Verfahren nach Anspruch 1, wobei bei Annäherung an das Zielobjekt oder die Zielperson (340) die AR-Einblendung für das Symbol (310) so berechnet wird, dass das Symbol (310) am Ort des Zielobjektes oder der Zielperson (340) eingeblendet wird, wenn das Zielobjekt oder die Zielperson (340) in Sichtweite ist, wobei der Richtungsindikator (315) auf den Boden vor dem Zielobjekt oder der Zielperson (340) gerichtet ist.

3. Verfahren nach Anspruch 1 oder 2, wobei bei weiterer Annäherung an das Zielobjekt, und dadurch bedingter Herauswanderung des Zielobjektes oder Zielperson (340) aus dem Einblendbereich die AR-Einblendung für das Symbol (310) so berechnet wird, dass das Symbol (310) am Rand des Einblendbereiches so dargestellt wird, dass der Richtungsindikator (315) zum Zielobjekt oder zur Zielperson (340) gerichtet ist.

4. Verfahren nach Anspruch 3, wobei die AR-Einblendung bei weiterer Annäherung an das Zielobjekt für das Symbol (310) so berechnet wird, dass das Symbol (310) vom Rand des Einblendbereiches (21) in Richtung zur Straßenmitte weggerückt erscheint.

5. Verfahren nach Anspruch 3 oder 4, wobei die AR-Einblendung für das Symbol (310) so berechnet wird, dass das Symbol (310) vergrößert wird, wenn das Fahrzeug (10) sich an das Zielobjekt oder die Zielperson (340) annähert.

6. Verfahren nach einem der vorhergehenden Ansprüche, wobei das Symbol (310) eine Sprechblasenform hat, bei der in der Mitte des Symbols (310) eine Abbildung oder ein Piktogramm des Zielobjektes oder der Zielperson (340) eingefügt wird und der Richtungsindikator (315) als Richtungspfeil am Rand ausgebildet wird.

7. Verfahren nach Anspruch 6, wobei der Richtungspfeil als Sprechblasenpfeil in den Rand des Symbols (310) integriert wird.

8. Verfahren nach einem der vorhergehenden Ansprüche, wobei die AR-Einblendung für die Darstellung des Symbols (310) so berechnet wird, dass der Name oder eine andere Bezeichnung (330) des Zielobjektes oder der Zielperson (340) unterhalb des Symbols (310) eingeblendet wird.

9. Verfahren nach einem der Ansprüche 6 bis 8, wobei die AR-Einblendung ebenfalls eine Entfernungsangabe bis zum Zielobjekt oder der Zielperson (340) umfasst, die so berechnet wird, dass die Entfernungsangabe neben dem Symbol (310) eingeblendet wird.

10. Vorrichtung zur Durchführung des Verfahrens nach einem der vorhergehenden Ansprüche, aufweisend eine AR-Anzeigeeinheit (20), entsprechend "augmented reality"-Einblendung, weiter aufweisend ein Navigationssystem (130), von dem eine Navigationsroute berechnet wird, weiter aufweisend eine Recheneinheit (40) zur Berechnung einer AR-Einblendung, **dadurch gekennzeichnet, dass** die Recheneinheit (40) für die Berechnung einer AR-Einblendung ausgelegt ist, der Art, dass ein Symbol (310) für ein Zielobjekt oder eine Zielperson (340) an der nächsten Abbiegestelle oder am Horizont eingeblendet wird, wobei das Symbol (310) so gestaltet ist, dass für den Fahrer neben der Information um welches Zielobjekt oder welche Zielperson (340) es sich handelt, ein Richtungsindikator (315) erkennbar wird, in welcher Richtung das Zielobjekt oder die Zielperson (340) zu finden ist.

11. Vorrichtung nach Anspruch 10, wobei die Vorrichtung mit Umfeldbeobachtungsmitteln (150) ausgestattet ist, mit deren Hilfe eine Erkennung der Zielperson (340) oder des Zielobjektes erfolgt.

12. Vorrichtung nach Anspruch 10 oder 11, wobei die Recheneinheit (40) weiterhin so ausgelegt ist, die Berechnungen von AR-Einblendungen nach einem der Ansprüche 2 bis 9 durchzuführen.

13. Vorrichtung nach einem der Ansprüche 10 bis 12, wobei die Anzeigeeinheit (20) ein Head-Up Display HUD oder eine Datenbrille ist.

14. Kraftfahrzeug, **dadurch gekennzeichnet, dass** das Kraftfahrzeug (10) eine Vorrichtung nach einem der Ansprüche 10 bis 13 aufweist.

15. Computerprogramm, **dadurch gekennzeichnet, dass** das Computerprogramm ausgelegt ist, bei Abarbeitung in einer Recheneinheit (40) die Schritte des Verfahrens zur Berechnung einer AR-Einblendung für die Darstellung einer Navigationsroute (2009, 2010) auf einer AR-Anzeigeeinheit (20) nach einem der Ansprüche 1 bis 9 durchzuführen.
